# EUROPÄISCHE PATENTANMELDUNG

(11) **EP 1 054 345 A2**
(43) Veröffentlichungstag der Anmeldung: **22.11.2000**
(21) Anmeldenummer: 00110137.7
(22) Anmeldetag: 11.05.2000
(51) Int. Cl.: G06K 19/073

(54) **Digitale Analyse der externen Taktfrequenz von Chipkarten**

(30) Priorität: 20.05.1999 DE 19923231
(71) Anmelder: Beta Research GmbH, 85774 Unterföhring (DE)
(72) Erfinder: Mester, Roland, 81827 München (DE)
(74) Vertreter: Heselberger, Johannes

(57) **Zusammenfassung**

Chipkarte mit einem Chip mit einer internen Taktquelle, die eine interne Taktfrequenz ausgibt, und einer Eingangs-/Ausgangsschnittstelle über die dem Chip eine externe Taktfrequenz übermittelt wird, die die Funktionen des Chips im Normalbetrieb taktet, dadurch gekennzeichnet, daß der Chip mindestens eine Analyseeinheit zur digitalen Analyse der externen Taktfrequenz und mindestens eine Alarmfunktion aufweist, die aktiviert wird, wenn die analysierte externe Taktfrequenz gegenüber der internen Taktfrequenz um einen bestimmten Betrag oder um ein bestimmtes Verhältnis abweicht.

## Beschreibung

Die vorliegende Erfindung betrifft eine Chipkarte und ein Verfahren zur digitalen Analysierung von Frequenzen bei Chipkarten, insbesondere um eine Einflußnahme auf den sicheren Betrieb der Chipkarte über die Taktfrequenz zu verhindern.

Chipkarten sollen grundsätzlich möglichst einfach zu bedienen und möglichst kostengünstig in der Herstellung sein, aber auch gerade bei sicherheitstechnischen Anwendungen eine größtmögliche Sicherheit gewähren. Ein Angriffspunkt auf Daten einer Chipkarte ist es, die Arbeitsweise des Chips der Chipkarte durch eine Beeinflussung des dem Chips extern zugeführten Taktes zu kontrollieren. Damit ist es prinzipiell möglich über den externen Takt die Geschwindigkeit der Programmausführung des Chips extern zu steuern. Bei einem besonders langsamen Takt ist es zum Beispiel möglich mit einem Elektronenstrahlmikroskop den Datenfluß zu beobachten und bei einem besonders schnellen Takt ist es möglich die Chipkarte in undefinierte Zustände zu überführen. Daher wird in bekannten Chipkarten eine analoge Frequenzdetektierung dazu verwendet, den Prozessor der Chipkarte bei einer Herabsetzung der externen Taktfrequenz unter einen Referenzwert zu warnen, so daß dieser entsprechend reagieren und beispielsweise seinen Betrieb einstellen kann.

Der Nachteil bei der analogen Frequenzdetektierung ist allerdings die große Parameterstreuung. Außerdem sind die Frequenzen analog wesentlich schwieriger zu testen, da die Abschaltung bei einer bestimmten Frequenz nur für konstante Parameter beispielsweise der Temperatur und der Spannung festgelegt werden kann, eine Änderung dieser Parameter aber eine Abschaltung bei einer anderen Frequenz zur Folge hat.

Die Aufgabe der Erfindung ist deshalb die Bereitstellung einer Chipkarte und eines Verfahrens zur Analyse der externen Taktfrequenz der Chipkarte.

Die Lösung dieser Aufgabe besteht in der Chipkarte und dem Verfahren wie sie in den unabhängigen Ansprüchen beschrieben sind.

Erfindungsgemäß wird eine Chipkarte bereitgestellt mit einem Chip, mit einer internen Taktquelle, mit einer internen Taktfrequenz, und einer Eingangs-/Ausgangsschnittstelle über die dem Chip eine externe Taktfrequenz übermittelt wird, die die Funktionen des Chips im Normalbetrieb taktet, wobei der Chip mindestens eine Analyseeinheit zur digitalen Analyse der externen Taktfrequenz und mindestens eine Alarmfunktion aufweist, die aktiviert wird, wenn die analysierte externe Taktfrequenz die interne Taktfrequenz um einen bestimmten Betrag oder um ein bestimmtes Verhältnis unterschreitet. Dabei kann die interne Taktquelle zum Beispiel durch einen Ringoszillator mit einer ungeraden Anzahl von Invertern realisiert werden, der nicht anzuhalten ist.

Der Chip verwendet grundsätzlich zuerst die interne Taktfrequenz. Parallel wird der Chip über die Eingangs-/Ausgangsschnittstelle des Chips mit der externen Taktfrequenz versorgt. Bis zum Abschluß der Analyse des externen Takts werden alle Funktionen unter Verwendung des internen Taktes ausgeführt. Nach einer positiven Analyse des externen Taktes synchronisiert der Chip für die Erledigung der bestimmungsgemäßen Aufgaben, dem sogenannten Normalbetrieb, auf den externen Takt.

Sowohl der interne, als auch der externe Takt wird von einer Analyseeinheit in der Chipkarte aufgenommen. Mit Hilfe dieser erfindungsgemäßen Analyseeinheit wird die Frequenzen des externen Taktes analysiert, da diese einen bestimmten Wert nicht unterschreiten sollte. Dieser Wert kann in Relation zur internen Taktfrequenz, das heißt als Verhältnis von externer zu interner Taktfrequenz, als absoluter Wert oder als absoluter Differenzbetrag des externen Taktes zum internen Takt, definiert wird. Für den Vergleich der internen mit der externen Taktfrequenz ist es deshalb auch wichtig die interne Taktfrequenz so zu wählen, daß der Vergleich so genau wie möglich durchgeführt werden kann. Deshalb wird vorzugsweise die interne Taktfrequenz mindestens zehnmal größer gewählt, als die erwartete externe Taktfrequenz.

Nach einer festgelegten Entscheidungsfunktion, die auf der Grundlage dieses Taktfrequenz-Vergleichs entscheidet, ob die Minimal-Taktfrequenz erreicht oder unterschritten wurde und somit möglicherweise ein Angriff auf die Integrität der Daten auf dem Chip vorliegt, können dann weitere Funktionen ausgeführt werden. Bei ausreichend hoher externer Taktfrequenz kann zum Beispiel eine Anpassungsfunktion ausgeführt werden, die ein Umschalten des Chips von dem internen Takt auf den externen Takt und damit den Normalbetrieb ermöglicht. Bei zu niedriger externer Taktfrequenz kann aber auch eine Alarmfunktion ausgeführt werden, die beispielsweise alle Prozesse des Chips abbricht oder unsinnige oder fehlerhafte Funktionen ausführen läßt.

Beim Betrieb des Chips mit der externen Taktfrequenz im Normalbetrieb wird regelmäßig überprüft, ob die externe Taktfrequenz immer noch die Voraussetzung der Mindestfrequenz erfüllt. Sinkt die externe Taktrate unter die Mindestfrequenz wird die genannte Alarmfunktion ausgelöst.

Vorzugsweise weist die Analyseeinheit eine Schieberegisterfunktion auf, die mit der internen Taktfrequenz betrieben wird und die die externe Taktfrequenz als digitales Signal aufnimmt. Diese Schieberegisterfunktion übernimmt die Aufgabe des digitalen Frequenzvergleichs in der Analyseeinheit. Das externe Taktsignal wird in diesem Fall in ein digitales Signal umgewandelt und dann an den Eingang des Schieberegisters angelegt. Mit der Taktrate des Schieberegisters, hier ist das der interne Takt, wird dann jeweils ein neues Register des Schieberegisters gefüllt. Anhand der Anzahl der benachbarten Register mit gleichem Inhalt kann dann entschieden werden, um das wievielfache die Frequenz des externen Taktes kleiner ist, als die des internen. Entscheidend für die Qualität des Vergleichs ist hier die Taktrate des Schieberegisters, da wenn diese interne Taktrate zu niedrig ist das Ergebnis verfälscht werden kann.

Vorzugsweise unterbricht die aktivierte Alarmfunktion den für den Normalbetrieb vorgesehenen Funktionsablauf des Chips. Das Auslösen der Alarmfunktion signalisiert die Gefahr, daß der Datenfluß des Chips beobachtet werden könnte. Als Reaktion darauf sollte der Chip alle Operationen, die für einen Beobachter interessant sein könnten abbrechen. Es kann aber zum Beispiel auch der komplette normale Betriebsablauf abgebrochen werden und in einen Täuschungsbetrieb umgeschaltet werden, in dem keine geheimen Operationen ausgeführt werden.

Vorzugsweise werden durch die Aktivierung der Alarmfunktion Täuschungs-Funktionsabläufe in dem Chip initiiert. Bei der Verwendung dieser Täuschungs-Funktionsabläufe erkennt der Beobachter nicht, daß durch die Analyse der externen Taktfrequenz die zu niedrige Frequenz festgestellt und entsprechend reagiert wurde. Dies erschwert die Analyse der Chipkarte noch einmal wesentlich.

Die vorliegende Erfindung bezieht sich auch auf ein Verfahren zur Analyse einer externen Taktfrequenz durch einen Chip auf einer Chipkarte das mindestens folgende Schritte aufweist: Aufnahme der externen Taktfrequenz mit der die Funktionen des Chips im Normalbetrieb getaktet werden über eine Eingangs-/Ausgangsschnittstelle, Bereitstellung einer internen Taktfrequenz durch den Chip und digitale Analyse der externen Taktfrequenz durch eine Analyseeinheit in dem Chip, wobei eine Alarmfunktion ausgelöst wird, wenn die in der Analyseeinheit analysierte externe Taktfrequenz die interne Taktfrequenz um einen bestimmten Betrag oder um ein bestimmtes Verhältnis unterschreitet.

Vorzugsweise wird zur Analyse der externen Taktfrequenz eine Schieberegisterfunktion verwendet, die mit der internen Taktfrequenz betrieben wird und die die externe Taktfrequenz als digitales Signal aufnimmt. Weiter bevorzugt wird durch die Aktivierung der Alarmfunktion der für den Normalbetrieb vorgesehene Funktionsablauf des Chips unterbrochen. Besonders bevorzugt wird durch die Aktivierung der Alarmfunktion ein Täuschungs-Funktionsab lauf auf dem Chip initiiert.

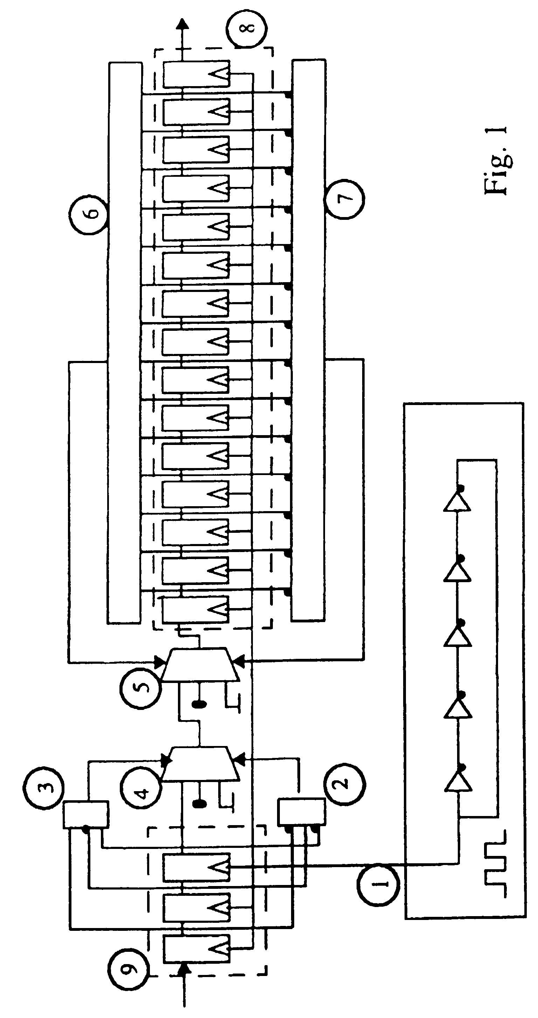

Die vorliegende Erfindung wird beispielhaft in Figur 1 dargestellt. Figur 1 zeigt eine Frequenzdetektionseinheit mit Schieberegistern für eine erfindungsgemäße digitale Analyse der externen Frequenz.

Die Frequenzdetektionseinheit umfaßt einen Schieberegister 9 zur Erfassung von zu hohen Frequenzen und einen Schieberegister 8 zur Erfassung von zu niedrigen Frequenzen. Der externe Takt ist das Eingangssignal für den Schieberegister 9, der mit einem internen Takt 1, erzeugt durch eine interne Taktquelle betrieben wird. Der Inhalt des Schieberegisters 9, der aus drei Registern besteht, wird von zwei Analyseeinheiten 2 und 3 überwacht. Sollte der externe Takt so schnell sein, daß in dem Schieberegister 9 die Bitkombinationen 101 oder 010 von den Analyseeinheiten 2 oder 3 festgestellt werden, dann wird in einer der Analyseeinheiten eine Alarmfunktion ausgelöst, aufgrund derer die Analyseeinheiten 2 oder 3 den Multiplexer 4 veranlassen für drei Takte eine 1 weiterzuleiten. Durch diesen Teil der Frequenzdetektionseinheit wird verhindert, daß der Chip von zu schnellen Taktraten, im Vergleich zum internen Takt 1, betrieben wird.

Das Ausgangssignal des Multiplexers 4 wird über den Multiplexer 5 an den Schieberegister 8 weitergeleitet. Dieser Schieberegister 8 besteht aus 15 Registern, die von den Analyseeinheiten 6 und 7 überwacht werden. Sollte sich in allen 15 Registern des Schieberegisters 8 einen 0 befinden, wird in der Analyseeinheit 7 eine Alarmfunktion ausgelöst, die den Multiplexer 5 veranlaßt für die nächsten 15 Takte eine 1 an das Schieberegister 8 weiterzuleiten. Sollte sich aber in allen 15 Registern des Schieberegisters 8 eine 1 befinden, wird in der Analyseeinheit 6 eine Alarmfunktion ausgelöst, die den Multiplexer 5 veranlaßt für die nächsten 15 Takte eine 0 an das Schieberegister 8 weiterzuleiten. In diesem Teil der Frequenzdetektionseinheit wird verhindert, daß der Chip von zu langsamen Taktraten, im Vergleich zum internen Takt betrieben wird.

Die vorliegende Erfindung stellt damit eine Chipkarte und ein Verfahren zur einfachen und digitalen Analysierung von externen Taktfrequenzen bei Chipkarten bereit, insbesondere um eine Einflußnahme auf den sicheren Betrieb der Chipkarte über die Taktfrequenz zu verhindern.

## Patentansprüche

1. Chipkarte mit einem Chip mit einer internen Taktquelle, die eine interne Taktfrequenz ausgibt, und einer Eingangs-/Ausgangsschnittstelle über die dem Chip eine externe Taktfrequenz übermittelt wird, die die Funktionen des Chips im Normalbetrieb taktet,
**dadurch gekennzeichnet, daß**
der Chip mindestens eine Analyseeinheit zur digitalen Analyse der externen Taktfrequenz und mindestens eine Alarmfunktion aufweist, die aktiviert wird, wein die analysierte externe Taktfrequenz gegenüber der internen Taktfrequenz um einen bestimmten Betrag oder um ein bestimmtes Verhältnis abweicht.

2. Chipkarte nach Anspruch 1, dadurch gekennzeichnet, daß die Analyseeinheit mindestens eine Schieberegisterfunktion aufweist, die mit der internen Taktfrequenz betrieben wird, und die die externe Taktfrequenz als digitales Signal aufnimmt.

3. Chipkarte nach einem der Ansprüche 1 oder 2, dadurch gekennzeichnet, daß die Alarmfunktion bei Aktivierung den für den Normalbetrieb vorgesehenen Funktionsablauf des Chips unterbricht.

4. Chipkarte nach Anspruch 3, dadurch gekennzeichnet, daß die Alarmfunktion bei Aktivierung Täuschungs-Funktionsabläufe in dem Chip initiiert.

5. Verfahren zur Analyse einer externen Taktfrequenz durch einen Chip auf einer Chipkarte, das mindestens folgende Schritte aufweist:
Aufnahme der externen Taktfrequenz mit der die Funktionen des Chips im Normalbetrieb getaktet werden über eine Eingangs-/Ausgangsschnittstelle,
Bereitstellung einer internen Taktfrequenz durch eine interne Taktquelle des Chips und
digitale Analyse der externen Taktfrequenz durch eine Analyseeinheit in dem Chip,
**dadurch gekennzeichnet, daß**
eine Alarmfunktion ausgelöst wird, wenn die in der Analyseeinheit analysierte externe Taktfrequenz gegenüber der internen Taktfrequenz um einen bestimmten Betrag oder um ein bestimmtes Verhältnis abweicht.

6. Verfahren nach Anspruch 5, dadurch gekennzeichnet, daß zur Analyse der externen Taktfrequenz eine Schieberegisterfunktion verwendet wird die mit der internen Taktfrequenz betrieben wird und die die externe Taktfrequenz als digitales Signal aufnimmt.

7. Verfahren nach einem der Ansprüche 5 oder 6, dadurch gekennzeichnet, daß durch die Aktivierung der Alarmfunktion der für den Normalbetrieb vorgesehene Funktionsablauf des Chips unterbrochen wird.

8. Verfahren nach Anspruch 7, dadurch gekennzeichnet, daß durch Aktivierung der Alarmfunktion ein Täuschungs-Funktionsablauf auf dem Chip initiiert wird.
